(19) Europäisches Patentamt
European Patent Office
Office européen des brevets

(11) **EP 2 916 015 A1**

(12) **EUROPÄISCHE PATENTANMELDUNG**

(43) Veröffentlichungstag:
**09.09.2015 Patentblatt 2015/37**

(51) Int Cl.:
*F16B 5/02* *(2006.01)*      *B61D 45/00* *(2006.01)*
*F16F 15/02* *(2006.01)*

(21) Anmeldenummer: **15157846.5**

(22) Anmeldetag: **05.03.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(30) Priorität: **05.03.2014 DE 102014102908**

(71) Anmelder: **Bombardier Transportation GmbH 10785 Berlin (DE)**

(72) Erfinder:
• **Klamka, Dr. Heinz**
 **16761 Hennigsdorf (DE)**
• **Prockat, Dr. Jan**
 **12559 Berlin (DE)**

(74) Vertreter: **Zimmermann & Partner Patentanwälte mbB Postfach 330 920 80069 München (DE)**

(54) **Komponente mit reaktionskraftoptimierter Halterung, Fahrzeug, sowie verfahren**

(57)      Eine Komponente zum Befestigen an einer Befestigungsstruktur hat einen Massenschwerpunkt (101) mit einer vordefinierten Sphäre (105) um den Massenschwerpunkt (101) und mehrere, insbesondere voneinander beabstandete Befestigungsschnittstellen (230) für auf einachsige Zug- bzw. Druckbeaufschlagung ausgelegte Befestigungselemente, durch welche die Befestigungselemente derart ausgerichtet werden, dass die Wirklinien der von den Befestigungselementen zum Befestigen der Komponente aufgebrachten Haltekräfte die Sphäre (105) um den Massenschwerpunkt (101) durchdringen.

Fig. 4

## Beschreibung

### Technisches Gebiet

Die vorliegende Erfindung betrifft die Befestigung schwerer Komponenten an einer Hauptstruktur, wie z.B. einer Platte oder einem Rahmen, oder an Befestigungspunkten eines Land-, Wasser-, oder Luftfahrzeuges, und insbesondere an der Wagenkastenstruktur eines Schienenfahrzeuges.

### Vorbekannter Stand der Technik

Die Anbindung schwerer Komponenten an eine mobile Hauptstruktur mittels schwingungsisolierender Anbindungselemente stellt ein grundsätzliches Problem insbesondere in der Fahrzeugtechnik dar. Die schwingungstechnisch entkoppelte Anbindung großer Komponenten, und insbesondere von Komponenten mit großem spezifischen Gewicht an einer Hauptstruktur kann beispielsweise unter Zwischenschaltung einer Federung erfolgen.

Damit die Abklingzeiten von Schwingungen der so verbundenen Komponenten nicht unerwünscht lange dauern, werden die federnden Elemente häufig so ausgelegt, dass das Belastungsdiagramm jedes einzelnen Lastwechsels eine mehr oder weniger ausgeprägte, durch die innere Reibung in den federnden Komponenten verursachte Hystereseschleife aufweist.

Reicht die auf diese Weise erzielbare Dämpfung nicht aus, können separate Dämpfer zusätzlich verwendet werden, die parallel zu der Federung geschaltet sind, und an gleichen oder an etwas versetzt angeordneten Kraftangriffspunkten auf die angebundene Komponente wirken.

Im Schienenfahrzeugbau wurden bisher schwere Komponenten direkt an den Wagenkasten angeschraubt. Dies wird insbesondere deshalb als akzeptable Lösung angesehen, weil der Wagenkasten an sich bereits eine gefedert und gedämpft gelagerte Großkomponente darstellt und somit alle hieran befestigten Komponenten aus fahrdynamischer Betrachtung nicht mehr ungefederte Massen darstellen.

Erheblich gestiegene Ansprüche an eine wirksame Dämpfung von Vibrations- bzw. Körperschalleintrag in die Wagenkastenstruktur erfordern, dass schwere Komponenten auch über zwischengeschaltete Feder- oder Dämpferelemente am Wagenkasten befestigt werden. Das einfache Auflagern schwerer Komponenten auf zwischengeschalteten Feder- oder Dämpferelementen ohne weitere Verankerung mit dem Wagenkasten ist jedoch nur dann eine Lösung, wenn im Betriebsfall zwischen der Masse der zu lagernden Komponente und ihren wagenkastenseitigen Auflagerungspunkten außer in vertikaler Richtung keine nennenswerten implusartigen Reaktionskräfte wirken.

Weil schwere Großkomponenten, die z.B. in ein Schienenfahrzeug integriert werden müssen, nicht auf einer quasi-statischen Struktur ruhen, sondern auf Lagerpunkten eines mobilen Wagenkastens, muss dieser so konstruiert sein, dass seine Lagerungskomponenten insbesondere auch dann noch tauglich für die sichere Aufnahme der Massenträgheitskräfte der Komponente sind, wenn der mobile Wagenkasten z.B. in Fahrzeuglängsrichtung Stöße von bis zu dreifacher Erdbeschleunigung erfährt.

Bisherige Bauweisen sehen deshalb Lagergehäuse mit speziellen mehrachsig ausgerichteten Lagerbettungen vor, welche nicht nur die lotrechten Gewichtskräfte der Komponentenmasse abstützen, sondern auch die in Richtung der anderen Fahrzeugachsen gerichteten Trägheitsreaktionskräfte, wie z.B. jener, die aus einem in Fahrzeuglängsrichtung gerichteten $\pm$ 3 g Stoß resultieren.

Die Anbindungskomponenten zum Interface "Wagenkastenfußboden" wurden folglich so gestaltet, dass sie separate Flächen für den Eintrag aus horizontalen Stößen resultierender Querkräfte aufweisen.

Transformatoren werden beispielsweise in Schienenfahrzeugen im Allgemeinen im Wagenkasten gelagert und gehalten. In bekannten Systemen zur Lagerung von Transformatoren wird der Transformator aufgrund seines großen Gewichts und seiner Vibrationen an vier flexibel gelagerten Montagepunkten am Wagenkasten fixiert. Bekannte Transformatoren besitzen vier runde Zapfen, die in ein Keillager greifen. Ein Keillager ist ein Konstruktionselement, bei dem ein V-förmiges Innenteil und ein Außenteil durch eine anvulkanisierte Elastomerschicht verbunden sind. Das Keillager dient dazu, Schwingungen in z- und x-Richtung zu dämpfen und horizontale Kräfte in $\gamma$-Richtung aufzunehmen.

Transformatoren mit der oben beschriebenen Halterung besitzen meist zusätzlich je links und rechts einen viereckigen Zapfen, welcher in einen Anschlag eintaucht. Dieser harte Anschlag dient, z.B. im Crashfall, als Schutz für das Keillager. Durch den Anschlag wird auch gewährleistet, dass das Keillager im Fall von im Fahrbetrieb zwischen Transformator und Schienenfahrzeug in Längsrichtung auftretenden Kräften (z.B. beim Anfahren und Bremsen, bei Auflaufstößen oder im Crash-Fall) nicht zerstört wird. Die Trennung der beiden Funktionen Lagerung des Zapfens und Anschlag kann somit auch einen sicheren und zuverlässigen Betrieb gewährleisten.

Die DE 10 2005 057 121 A1 beschreibt den Einbau eines Montagerahmens für einen Transformator in die Tragstruktur eines Schienenfahrzeuges. Der Transformator ist über als Konuslager ausgeführte Elastomerlagerungen mit dem Montagerahmen verbunden, um eine schwingungstechnische Entkopplung des Transformators zu erreichen. Der Montagerahmen wird durch in Fahrzeugquerrichtung verlaufende Schrauben an Halfenschienen gehalten, die der Tragstruktur seitlich zugeordnet und an dieser starr befestigt sind.

Die CN 2017 45 603 U beschreibt eine Installationsstruktur für einen Transformator. Durch Montageplatten, die ein Montagespiel erlauben, kann sich ein Transformatormontagesitz auf und ab bewegen. Die Struktur beinhaltet zwei Montageplatten, die an einer unteren Montageplatte befestigt sind. Der Transformatormontagesitz ist an der unteren Montageplatte befestigt, wobei ein Elastomer zwischen der unteren Montageplatte und dem Transformatormontagesitz die Auf-und-ab-Bewegung des Transformatormontagesitzes ermöglicht.

In der CN 2012 78288 Y ist eine Befestigungsvorrichtung für einen beweglichen Transformator beschrieben, die Winkeleisen beinhaltet, um die Bewegung des Transformators auf einer Schiene einzuschränken. Zwei Winkeleisen werden bereitgestellt, wovon eines senkrecht zur Längsachse der Schiene und eines parallel zur Längsachse einer Schiene angeordnet ist. Die Winkeleisen limitieren eine Bewegung des Transformators durch das Limitieren der Bewegung einer Vorrichtung, die den Transformator aufnimmt.

Die JP 05-335153 A beschreibt die Befestigung eines Transformators für ein Fahrzeug. Die Transformatorbefestigung ist über eine Transformatoraufnahme an dem Fahrzeug befestigt. Die Transformatoraufnahme umgibt den Hauptkörper des Transformators und befestigt diesen somit an dem Fahrzeug.

## Nachteile des Standes der Technik

Nachteil sämtlicher bisher bekannten Lösungen ist, dass sie komplexe mehrachsig zueinander ausgerichtete Lager- und/oder Anschlagsebenen aufweisen und somit kompliziert zu fertigende und nur mit hohem Aufwand austauschbare Lagergehäuse erfordern.

Auch ist die gegenwärtig übliche Halterung für einen Transformator, die im Crashfall oder ähnlichen Lastfällen, wie zum Beispiel beim Anfahren und Bremsen oder bei Auflaufstößen, dafür sorgt, dass die Bewegung des Transformators in Fahrtrichtung eingeschränkt wird, keine optimale Lösung, weil weiterhin Massenreaktionskräfte des Transformators aus betriebsbedingten hochdynamischen Stößen über gesonderte mehrachsige Wirkflächen abgesetzt werden müssen und dabei Teile der Halterungen nach wie vor durch komplexe Spannungen belastet werden. Um die im Lastfall auftretenden Kräfte aufzunehmen, müssen die Befestigungselemente sehr massiv ausgeführt werden, da sie beispielsweise bei der Aufteilung der eingeleiteten Reaktionskraft auf separate, in unterschiedlichen Achsen angeordnete Lagerbettungen auch hohen Scherspannungen ausgesetzt sind. Dies ist nachteilig, da für tonnenschwere Komponenten teilweise sehr große und massive Befestigungselemente wie Bolzen, Buchen, Zapfen, Hülsen und Lagerschalen benötigt werden, die sehr eng tolerierte Maße aufweisen müssen. Wagenkastenseitig bedarf es dazu korrespondierender und passgenauer Bohrungen und Flächen. Neben dem damit verbunden erhöhten Fertigungsaufwand ist auch ein hoher Montageaufwand gegeben, um die großen und schweren Transformatoren passgenau einzusetzen.

## Problemstellung

Aufgabe der vorliegenden Erfindung ist es, eine reaktionskraftoptimierte Halterung schwerer Komponenten an einer mobilen Hauptstruktur, wie z.B. einer Platte oder einem Rahmen oder an Befestigungspunkten eines Luft-, Wasser-, oder Landfahrzeuges - insbesondere an der Wagenkastenstruktur eines Schienenfahrzeuges - zur Verfügung zu stellen.

Eine weitere Aufgabe der Erfindung besteht darin, die schwere Komponente so an die Wagenkastenstruktur anzubinden, dass die Übertragung von Körperschall zwischen der schweren Subkomponente und der Hauptstruktur möglichst effektiv gedämpft wird.

Auch müssen die mechanischen Befestigungspunkte der Komponente trotz der unabdingbar notwendig bleibenden Auslegung der Hauptstruktur auf mehrachsig auf sie einwirkende starke Stöße - wie sie z.B. bei einem Schienenfahrzeug als Folge von Anfahroder Bremsvorgängen oder bei Auflaufstößen auftreten - dennoch einen möglichst einfachen Aufbau haben.

## Erfindungsgemäße Lösung

Die obige Aufgabe wird durch eine Komponente nach Anspruch 1 oder 2, ein Fahrzeug nach Anspruch 8 sowie durch ein Verfahren nach Anspruch 12 oder 14 gelöst.

Gemäß einer Ausführungsform hat eine Komponente, insbesondere eine schwere Komponente, zum Befestigen an einer insbesondere tragenden Befestigungsstruktur, beispielsweise einer mobilen Hauptkomponente oder eines Fahrzeugs, einen Massenschwerpunkt mit einer vordefinierten Sphäre um den Massenschwerpunkt und mehrere, insbesondere voneinander beabstandete Befestigungsschnittstellen für einachsige Befestigungselemente, die für einachsige Zug- bzw. Druckbeaufschlagung in Richtung einer Wirkachse ausgelegt sind. Wirklinien der Haltekräfte eines Befestigungselementes verlaufen im Wesentlichen parallel zur Wirkachse des Befestigungselementes. Die Wirklinien können bevorzugt auch auf der Wirkachse des Befestigungselementes liegen. Durch die Befestigungsschnittstellen werden die Befestigungselemente derart ausgerichtet, dass die Wirklinien der von den Befestigungselementen zum Befestigen der Komponente aufgebrachten Haltekräfte die Sphäre um den Massenschwerpunkt durchdringen. Die Sphäre ist konzentrisch zum Massenschwerpunkt (Mittelpunkt der Sphäre).

Die Anbindung einer schweren Komponente an eine durch starke Stoßimpulse dynamisch belastete Hauptstruktur erfolgt erfindungsgemäß bevorzugt ausschließlich mittels einachsiger, d.h. ausschließlich für Zug- und/oder Druckbeaufschlagung entlang der Wirkachse ausgelegter Anbindungen. Diese werden durch Befestigungselemente gebildet, welche komponentenseitig durch die Befestigungsschnittstellen in Richtung des Massenschwerpunkts ausgerichtet werden.

Die Komponente kann daher mehrere Befestigungsschnittstellen für einachsige Befestigungselemente aufweisen, wobei die Befestigungselemente bei Befestigung der Komponente an der Befestigungsstruktur derart durch die Befestigungsschnittstellen ausgerichtet werden, dass die Wirkachse jedes Befestigungselements die Sphäre um den Massenschwerpunkt durchdringt.

Gemäß einer Ausführungsform weist die Komponente weiterhin mehrere, insbesondere voneinander beabstandete Befestigungsflächen auf, die räumlich so ausgerichtet sind, dass die Flächennormale jeder einzelnen Befestigungsfläche die Sphäre um den Massenschwerpunkt der Komponente durchdringt, wobei an jeder Befestigungsfläche eine Befestigungsschnittstelle für jeweils ein für einachsige Zug- bzw. Druckbeaufschlagung ausgelegtes Befestigungselement vorgesehen ist.

Die Anbindung der Komponente an die Befestigungsstruktur wird damit komponentenseitig durch die Befestigungsflächen und hauptstrukturseitig oder fahrzeugseitig durch die Auflageflächen unterstützt. Jede Befestigungsfläche verläuft zu ihrer zugeordneten Auflagefläche parallel, so dass die Befestigungsflächen entweder direkt flächig auf den Auflageflächen aufliegen oder unter Zwischenlage des Befestigungselements oder eines beispielsweise dämpfenden Elements.

Gemäß einer Ausführungsform werden die komponentenseitige Befestigungsfläche und fahrzeugseitige Auflagefläche so ausgerichtet, dass die jeweiligen Flächennormalen die Sphäre um den Massenschwerpunkt der Komponente herum durchdringen und bevorzugt durch den Massenschwerpunkt der Komponente verlaufen. Wirkt eine beliebige Kraft auf die Komponente, beispielsweise in Fahrtrichtung des Fahrzeugs aufgrund einer starken Verzögerung, kann diese Kraft in einzelne Teilkomponenten zerlegt werden, die in Richtung der Flächennormalen verlaufen, idealerweise durch den Flächenschwerpunkt der Befestigungsfläche, und die Sphäre um den Massenschwerpunkt der Komponente herum durchdringen. Diese Teilkräfte wirken daher auf die Anbindung zwischen Befestigungsfläche und zugeordneter Auflagefläche exakt nur als Druckkraft oder als Zugkraft, wenn die Befestigungsflächen und Auflageflächen senkrecht von der durch den Massenschwerpunkt verlaufenden Flächennormalen durchdrungen werden. Scherkräfte treten bei dieser Anbindung an den Befestigungselementen, die in den Befestigungsschnittstellen gelagert sind, dagegen nicht auf. Weil es fertigungs- und montagetechnisch nicht möglich ist, einen "exakten" gemeinsamen Schnittpunkt aller Flächennormalen zu realisieren, ist erfindungsgemäß vorgesehen, dass die Flächennormalen der Auflagerungspunkte statt des exakten Massenschwerpunktes eine Sphäre um den Massenschwerpunkt der Komponente herum durchdringen.

Die Befestigungsflächen stellen reale Flächen der Komponente dar, welche beispielsweise als Auflagefläche dienen. Die Flächennormale steht senkrecht auf ihrer Befestigungsfläche, wobei der Fußpunkt der auf den Massenschwerpunkt weisenden Flächennormale im Flächenschwerpunkt der Befestigungsfläche entspringen kann, oder vorzugsweise in dem Punkt der Befestigungsfläche, an welchem die Kraftwirkungslinie des Befestigungselements die Befestigungsfläche durchdringt.

Für eine einfache Montage der Komponente können die Flächenschwerpunkte der Befestigungsflächen vorzugsweise in einer gemeinsamen Ebene angeordnet sein. Die Komponente kann hängend befestigt sein, z.B. indem eine gemeinsame Ebene der Flächenschwerpunkte oberhalb der Komponente angeordnet ist, oder stehend, indem eine gemeinsame Ebene der Flächenschwerpunkte unterhalb der Komponente angeordnet ist. Indem die gemeinsame Ebene der Flächenschwerpunkte waagerecht angeordnet wird, kann eine asymmetrische Belastung der Befestigungsflächen bzw. der die Komponente anbindenden Befestigungselemente vermieden werden.

Die so gebildeten Befestigungspunkte können Stoßbelastungen aus allen sechs unterschiedlichen Koordinatenrichtungen ($\pm$x, $\pm$y, $\pm$z) aufzunehmen, ohne dass die Befestigungspunkte, d.h. die Befestigungselemente, nennenswerten Scherkräften ausgesetzt werden. Dadurch können nur einachsig belastbare Befestigungselemente zum Verbinden der Komponente mit der Befestigungsstruktur verwendet werden, wodurch der Gesamtaufbau insgesamt vereinfacht wird.

Die räumliche Anordnung der Befestigungsflächen und Auflageflächen unterscheidet sich daher von bisherigen Herangehensweisen, bei denen die Anbindungen typischerweise parallel zu einer der Hauptachsen in x-, y-, oder z-Richtung verlaufen, wenn die Hauptachsen in Richtung der Fahrzeuglängsachse, der Fahrzeugbreite und der Fahrzeughöhe liegen. Vielmehr liegen die Befestigungsflächen und Auflageflächen erfindungsgemäß in jeweiligen Ebenen, deren Flächennormalen zum Massenschwerpunkt weisen und typischerweise zu den Hauptachsen geneigt sind. Diese Neigung dieser Ebenen wird für jeden Befestigungspunkt separat ermittelt, wozu die räumlich Lage des Massenschwerpunkts der Komponente bekannt sein oder ermittelt werden muss.

Gemäß einer Ausführungsform liegt jede Befestigungsfläche der Komponente an einer ihr zugeordneten Auflagefläche unter Zwischenlage eines einachsigen oder für einachsige Zug- bzw. Druckbeaufschlagung ausgelegten Befestigungselements an. Die Wirkachse des für einachsige Zug- bzw. Druckbeaufschlagung ausgelegten Befestigungselements ist parallel zur Flächennormalen, sodass lediglich Zug- oder Druckkräfte in Richtung dieser Wirkachse wirken.

Bevorzugt grenzen die komponentenseitigen Befestigungsflächen nicht direkt aneinander an, sondern sind in Richtung der Flächennormalen parallel versetzt, sodass sie einen Bauraum belassen, in welchem Federungs- und Dämpfungselemente beliebiger Bauart zwecks schwingungstechnischer Trennung von Komponente und Hauptstruktur eingebaut werden.

Die schwingungsdämpfenden Elemente vermindern oder unterbinden den Eintrag von beispielsweise Körperschall von der Komponente in die Befestigungsstruktur und damit in tragende Strukturen des Schienenfahrzeugs.

Eine schwingtechnisch gewünschte oder erforderliche Zwischenschaltung von Federungs- und/oder Dämpfungselementen beliebiger Bauart kann mittels beliebiger mechanischer Befestigungsmittel erfolgen.

Auch wenn die besten Ergebnisse nur dann erzielt werden, wenn die Flächennormalen direkt durch den Massenschwerpunkt verlaufen, werden Scherkräfte zwischen den Befestigungs- und den Auflageflächen auch dann ausreichend minimiert, wenn angestrebt wird, den Radius der Sphäre um den Massenschwerpunkt der Komponente herum auf ein fertigungs- und montagetechnisch noch wirtschaftlich erreichbares Minimum zu reduzieren. Bevorzugt ist der Radius der Sphäre kleiner als 50% einer Breiten- oder Höhenabmessung der Komponente. Alternativ oder zusätzlich kann das Volumen der Sphäre weniger als 6% oder weniger als 3% des Komponentenvolumens betragen. Bei einer sehr hohen Fertigungsgenauigkeit kann das Volumen der Sphäre vorzugsweise weniger als 1% des Komponentenvolumens betragen. Gemäß einer bevorzugten Ausführungsform weicht die den Flächenschwerpunkt der Befestigungsfläche durchdringende Flächennormale maximal 22,5° von einer den Flächenschwerpunkt mit dem Massenschwerpunkt der Komponente verbindenden Geraden ab, vorzugsweise nur 15°, besonders vorzugsweise nur 5°.

Gemäß einer Ausführungsform sind die Befestigungsflächen integral an der Komponente ausgebildete Flächen. Die Komponente selbst verfügt damit über die entsprechend ausgerichteten Befestigungsflächen, d.h. diese werden im Rahmen der Herstellung der Komponente an dieser integral angeformt.

Gemäß einer Ausführungsform werden Stützelemente verwendet, welche bevorzugt unter Formschluss mit der Komponente verbunden sind, wobei an jedem Stützelement wenigstens jeweils eine der Befestigungsflächen ausgebildet ist. Die Stützelemente können separat zur Komponente hergestellte Elemente sein und werden mit der Komponente form-, kraft-, reib-, und/oder stoffschlüssig verbunden.

Jedes Stützelement verfügt über eine Befestigungsfläche. Die Stützelemente können daher für jede beliebige Komponente hergestellt und mit dieser verbunden werden, um die Komponente mit Befestigungsflächen auszustatten, deren Flächennormale durch den Massenschwerpunkt oder die definierte Sphäre um den Massenschwerpunkt herum verlaufen. Damit können Komponenten auch nachträglich mit den Befestigungsflächen versehen werden, beispielsweise bei einer Fahrzeuginstandsetzung.

Gemäß einer Ausführungsform ist jeder Befestigungsfläche mit zugeordneter Auflagefläche mindestens ein Befestigungselement zugeordnet, das entlang der und vorzugsweise koaxial zur Flächennormale der Befestigungsfläche ausgerichtet ist. Die komponentenseitigen Befestigungsschnittstellen bewirken eine entsprechende Ausrichtung der Befestigungselemente.

Die Befestigungselemente verbinden die Befestigungsfläche mit der Auflagefläche und werden dabei nur auf Zug oder Druck belastet, denn sie verlaufen in Richtung der Flächennormalen, in der die Teilkräfte wirken. Die Befestigungselemente können beispielsweise einfache Bolzen oder Schrauben sein.

Gemäß einer Ausführungsform weist ein Fahrzeug eine Befestigungsstruktur auf, an der eine Komponente mittels für einachsige Zug- bzw. Druckbeaufschlagung ausgelegter Befestigungselemente befestigt ist, sodass die Wirklinien der von den Befestigungselementen zum Befestigen und Halten der Komponente an der Befestigungsstruktur aufgebrachten Haltekräfte die Sphäre um den Massenschwerpunkt durchdringen.

Gemäß einer Ausführungsform handelt es sich bei dem Fahrzeug um ein Schienenfahrzeug. Insbesondere im Schienenfahrzeugbau stellt die hier vorgestellte Lösung einen sinnvollen Ansatz dar, um beispielsweise sehr schwere Komponenten am Schienenfahrzeug zu befestigen.

Gemäß einer Ausführungsform ist die Befestigungsstruktur mit dem Wagenkasten des Schienenfahrzeugs starr verbunden. Die Befestigungsstruktur kann damit auch Teil des Wagenkastens sein oder integral am Wagenkasten ausgebildet sein.

Gemäß einer Ausführungsform ist die Komponente ein Transformator, beispielsweise ein Haupttransformator eines Schienenfahrzeugs. Weiterhin kann die Komponente ein oder mehrere Powerpacks, ein oder mehrere Klimageräte, eine oder mehrere Kühlanlagen, ein oder mehrere Umrichter, ein oder mehrere Stromrichter, ein oder mehrere Ladegeräte, ein oder mehrere Hauptschalter, ein oder mehrere Hilfsbetriebeumrichter, ein oder mehrere Kompressoren, ein oder mehrere Energiespeicher, ein oder mehrere Lüfteraggregate, ein oder mehrere Dieselmotoren, ein oder mehrere Wandlergetriebe, eine oder mehrere Dieselmotor-Generatorkombinationen, ein oder mehrere Bremscontainer, ein oder mehrere Gerätecontainer, und/oder eine oder mehrere Abgasanlagen sein. Die vorstehend genannten Geräte können als Einzelkomponente, d.h. als Großkomponente, oder in Gruppen zu einer Komponente zusammengefasst sein, beispielsweise mittels eines entsprechenden Rahmens, der dann die Befestigungsschnittstellen bereitstellt. Der Massenschwerpunkt wird dann für die in diesem Rahmen zusammengefasste Gerätegruppe ermittelt. Es ist auch möglich, dass lediglich einzelne Sub-Komponenten der oben genannten Geräte als Komponente, wie hierin beschrieben, gelagert werden.

Gemäß einer Ausführungsform umfasst ein Verfahren zur Herstellung einer Komponente zum Befestigen an einer Befestigungsstruktur eines Fahrzeugs, folgendes:

Ermitteln des Massenschwerpunkts der Komponente und Definieren einer Sphäre um den Massenschwerpunkt der Komponente; und

Ausbilden von mehreren, insbesondere voneinander beabstandeten Befestigungsschnittstellen für einachsig belastete Befestigungselemente an der Komponente, durch welche die Befestigungselemente zum Befestigen der Komponente derart ausrichtbar sind, dass die Wirklinien der von den Befestigungselementen zum Befestigen der Komponente aufgebrachten Haltekräfte die Sphäre um den Massenschwerpunkt durchdringen.

Zunächst wird der Massenschwerpunkt der Komponente ermittelt. Dies kann beispielsweise bereits computergestützt beim Entwerfen der Komponente erfolgen, da hier auch die Massenverteilung vorgegeben wird, aus der sich der Massenschwerpunkt errechnen lässt. Die Größe der Sphäre mit einem angestrebten Radius r um den Massenschwerpunkt der Komponente herum (Massenschwerpunkt ist Mittelpunkt der Sphäre) wird typischerweise in Abhängigkeit vom Volumen der Komponente gewählt. Sie spiegelt einen gewissen Toleranzbereich für die Ausrichtung der Flächennormalen wieder, innerhalb dessen eine weitgehend ausreichende Verminderung von Scherkräften an den Befestigungspunkten erreicht werden kann.

Gemäß einer Ausführungsform wird daher ein anzustrebender ungefährer Radius der Sphäre um den Massenschwerpunkt der Komponente herum definiert.

Dann erfolgt die Ausbildung der Befestigungsschnittstellen, welche die gewünschte Ausrichtung der beispielsweise lösbar mit der Komponente verbindbaren, für einachsige Zug- bzw. Druckbeaufschlagung ausgelegten Befestigungselemente sicherstellen.

Gemäß einer Ausführungsform können zuvor Befestigungsflächen an der Komponente ausgebildet werden, die räumlich so ausgerichtet sind, dass die Flächennormale jeder einzelnen Befestigungsfläche die Sphäre mit dem angestrebten Radius r um den Massenschwerpunkt der Komponente herum durchdringt.

Nach der Ermittlung der Lage und des Radius r der Sphäre werden die Befestigungsflächen konstruiert und schließlich die Komponente mit den bevorzugt integral ausgebildeten Befestigungsflächen hergestellt.

Bei der Konstruktion der Befestigungsflächen können diese auch durch zusätzliche Elemente gebildet werden, die im Entwurfsstadium zur Komponente hinzugefügt und entwurfstechnisch mit dieser verbunden werden. Bei der eigentlichen Herstellung sind diese Elemente dann integraler Bestandteil der Komponente.

Gemäß einer Ausführungsform umfasst ein Verfahren zur Herstellung einer Komponente zum Befestigen an einer Befestigungsstruktur eines Fahrzeugs, folgendes:

Ermitteln des Massenschwerpunkts der Komponente und Definition eines anzustrebenden ungefähren Radius der Sphäre um den Massenschwerpunkt der Komponente herum; und

Ausbilden von Stützelemente, welche bevorzugt unter Formschluss mit der Komponente verbunden werden, wobei an jedem Stützelement jeweils wenigstens eine Befestigungsfläche ausgebildet wird, die räumlich so ausgerichtet ist, dass die Flächennormale jeder einzelnen Befestigungsfläche die Sphäre um den Massenschwerpunkt der Komponente herum durchdringt.

Bei diesem Verfahren werden die Befestigungsflächen nicht als integrale Flächen der Komponente ausgebildet, sondern als Teil von separaten Stützelementen, die dann bevorzugt unter Formschluss mit der Komponente verbunden werden und diese tragen.

Gemäß einer Ausführungsform wird an jeder Befestigungsfläche eine Befestigungsschnittstelle für ein Befestigungselement ausgebildet. Die Befestigungsschnittstelle kann beispielsweise eine Aufnahme für ein Befestigungselement sein, wobei sich die Aufnahme für das Befestigungselement entlang der und bevorzugt koaxial zur Flächennormalen der jeweiligen Befestigungsfläche erstreckt. Diese Befestigungselemente können auch vollständig separat zu den Befestigungsflächen und Auflageflächen sein. Beispielsweise können sowohl Befestigungsflächen als auch Auflageflächen lediglich in Richtung der Flächennormale oder zu ihr parallel versetzt ausgerichtete Bohrungen aufweisen, durch welche die Befestigungselemente gesteckt werden und dann die Komponente mit der Befestigungsstruktur des Fahrzeugs verbinden. Dies erleichtert die Montage.

Gemäß einer Ausführungsform umfasst ein Verfahren zur Herstellung eines Fahrzeugs, insbesondere eines Schienenfahrzeugs, das Herstellen einer Komponente; das Herstellen einer Befestigungsstruktur, die mit dem Fahrzeugs verbunden ist; und das Befestigen der Komponente mittels Befestigungselementen an der Befestigungsstruktur, sodass die Befestigungselemente so durch die Befestigungsschnittstellen ausgerichtet sind, dass die Wirklinien der Befestigungselemente die Sphäre durchdringen.

Gemäß einer Ausführungsform hat die Befestigungsstruktur Auflagefläche, wobei jede Auflagefläche zumindest abschnittsweise parallel zu einer ihr zugeordneten Befestigungsfläche der Komponente und/oder der Stützelemente angeordnet ist

Gemäß einer Ausführungsform umfasst das Verfahren weiterhin das Herstellen von Auflageflächen an der Befestigungsstruktur, wobei jede Auflagefläche zumindest abschnittsweise parallel zu einer ihr zugeordneten Befestigungsfläche der Komponente und/oder der Stützelemente angeordnet ist; und das Befestigen der Komponente an der Befestigungsstruktur, wobei jede Befestigungsfläche der Komponente an einer ihr zugeordneten Auflagefläche anliegt.

Die Komponente wird mit den Befestigungsflächen entweder als integraler Bestandteil oder über Stützelemente hergestellt. Ebenfalls erfolgt die Ausbildung der Befestigungsstruktur auf Seiten des Fahrzeugs mit den zugeordneten Auflageflächen. Dann erfolgt die Montage der Komponente an der Befestigungsstruktur, wobei die Befestigungsflächen entweder direkt oder unter Zwischenlage von dämpfenden Elementen, welche von den Befestigungselementen bereitgestellt werden können, auf den ihnen zugeordneten Auflageflächen ruhen.

Gemäß einer Ausführungsform wird die Komponente mit der Befestigungsstruktur mittels Befestigungselementen verbunden, die sich entlang der und idealerweise koaxial zur Flächennormalen der jeweiligen Befestigungsfläche erstrecken. Mittels der Befestigungselemente erfolgt dann das Verbinden der Komponente mit der Befestigungsstruktur. Da die Befestigungselemente in Richtung der jeweiligen Flächennormale ausgerichtet sind, werden diese fast ausschließlich auf Druck bzw. Zug belastet, bzw. bei einer bzgl. der Flächennormalen koaxialen Anordnung der Befestigungselemente nur auf Druck bzw. Zug.

Die vorstehend beschriebenen Ausführungsformen können beliebig miteinander kombiniert werden.

Kurzbeschreibung der Figuren

Die beiliegenden Zeichnungen veranschaulichen Ausführungsformen und dienen zusammen mit der Beschreibung der Erläuterung der Prinzipien der Erfindung. Die Elemente der Zeichnungen sind relativ zueinander und nicht notwendigerweise maßstabsgetreu.

Gleiche Bezugszeichen bezeichnen entsprechend ähnliche Teile.

Figur 1 zeigt eine 3-dimensionale Ansicht einer Komponente mit angesetzten Stützelementen gemäß einer Ausführungsform.

Figur 2 zeigt die Komponente aus Figur 2 von unten.

Figur 3 zeigt eine 3-dimensionale Ansicht einer Komponente mit integral angeformten Befestigungsflächen gemäß einer Ausführungsform.

Figur 4 zeigt die Komponente aus Figur 3 unter Anbindung an Auflageflächen einer Befestigungsstruktur.

Figur 5 zeigt eine 3-dimensionale Ansicht einer Komponente mit integral geformten Befestigungsflächen gemäß einer Ausführungsform.

Figur 6 zeigt eine geometrische Veranschaulichung zum besseren Verständnis der Wirkungsweise der Lagerung.

Ausführungsbeispiele

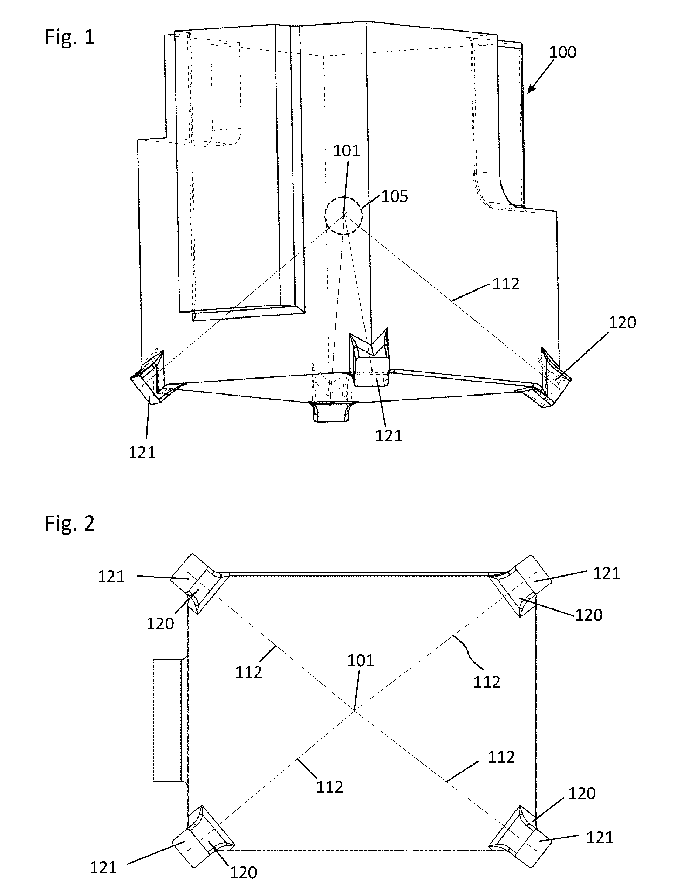

Figur 1 zeigt die äußere Kontur einer Komponente 100. Figur 2 zeigt die Komponente 100 von der Unterseite her.

Die Komponente 100 kann beispielsweise der Haupttransformator eines Schienenfahrzeugs sein. Die Erfindung ist jedoch nicht darauf beschränkt und kann auf jede Komponente (Bauteil oder Baugruppe) angewendet werden, für die eine reaktionskraftoptimierte Halterung an einer mobilen Hauptstruktur, beispielsweise eines Luft-, Wasser-, oder Landfahrzeuges und insbesondere an der Wagenkastenstruktur eines Schienenfahrzeuges zur Verfügung gestellt werden soll.

Die äußere Kontur und/oder die Massenverteilung der Komponente können unregelmäßig sein. Neben dem inneren Aufbau der Komponente kann auch der zur Verfügung stehende Bauraum eine angepasste äußere Form verlangen, welche von einer idealen geometrischen Form abweichen kann.

Die Komponente 100 hat einen Massenschwerpunkt 101, der hier als Punkt dargestellt ist. Typischerweise wird der Massenschwerpunkt 101 innerhalb des von der äußeren Form und/oder Verkleidung der Komponente 100 vorgegebenen Raums liegen. Es ist jedoch auch möglich, dass der Massenschwerpunkt außerhalb der eigentlichen Komponente liegt, beispielsweise bei U-förmigen Komponenten.

Der Massenschwerpunkt 101 ist typischerweise bekannt und ergibt sich aus der Massenverteilung. Da im Entwurfsstadium der Komponente 100 den einzelnen Bauteilen, aus denen die Komponente 100 aufgebaut wird, eine Masse zugeordnet werden kann, lässt sich der Massenschwerpunkt 101 relativ leicht errechnen.

Um eventuelle Abweichungen von der im Entwurfsstadium angenommenen Masseverteilung zu berücksichtigen, kann eine um den Massenschwerpunkt der Komponente herum angeordnete Sphäre 105 definiert werden, die ein Volumen um den beispielsweise computergestützt ermittelten Massenschwerpunkt 101 beschreibt. Solche Abweichungen ergeben sich beispielsweise aus intern verlegten Kabeln und andere Bauteilen, deren genaue Lage beim Entwerfen nicht ausreichend exakt definiert werden kann. Außerdem lassen sich kleinere Abweichungen und Modifizierungen bei der tatsächlichen Herstellung der Komponente berücksichtigen.

Aus der Lage des Massenschwerpunkts 101 und der Einbaulage der Komponente 100 kann die Lage von Befestigungsflächen 121 definiert werden. Bevorzugt werden die Befestigungsflächen 121 im unteren Randbereich der Komponente 100 vorgesehen, damit die Komponente 100 mit ihren Befestigungsflächen 121 auf eine hier nicht gezeigten Befestigungsstruktur des Schienenfahrzeugs, beispielsweise eines mit dem Wagenkasten starr verbundenen Rahmens, aufsitzt und das Gewicht der Komponente 100 auf den Befestigungsflächen 121 ruht. Es ist jedoch auch möglich, dass einzelne oder alle Befestigungsflächen 121 im oberen Randbereich der Komponente 100 angeordnet sind, wenn beispielsweise eine Aufhängung der Komponente gewünscht ist. Auch eine Kombination aus unteren und oberen Befestigungsflächen 121 ist möglich Der Begriff "untere Befestigungsfläche" beschreibt, dass die Komponente 100 aufgrund ihres Eigengewichts mit diesen Befestigungsflächen auf der Befestigungsstruktur des Fahrzeugs aufsitzt. Die "oberen Befestigungsflächen" sind Befestigungsflächen, die nicht unter Eigengewicht der Komponente 100 aufsitzen.

Bevorzugt kann die räumliche Anordnung der Befestigungsflächen 121 so erfolgen, dass die Flächennormalen 112 der Befestigungsflächen 121 eine Pyramide bilden, wobei die Fußpunkte der Flächennormalen 121 die Eckpunkte der Pyramide bilden. Die Grundfläche dieser Pyramide, definiert durch die Fußpunkte der Flächennormalen 121, ist allgemein ein Polygon. Beispielsweise kann die Grundfläche ein Dreieck sein, und die so gebildete Pyramide ist dann ein Tetraeder. In vielen Fällen wird die Grundfläche quadratisch oder rechteckig sein, oder zumindest einer dieser beiden Grundflächen nahekommen. Es ist jedoch auch möglich, dass die Grundfläche 5-eckig oder 6-eckig ist. Grundsätzlich kann die Grundfläche beliebig viele Eckpunkte aufweisen.

Jeder Eckpunkt definiert die Lage und/oder den Mittelpunkt einer Befestigungsfläche 121, deren Ausrichtung durch die zum Massenschwerpunkt 101 ausgerichtete Flächennormale bestimmt ist. Insbesondere definiert jeder Eckpunkt, zusammen mit der Flächennormalen, die Lage und Ausrichtung von Befestigungselementen, welche die eigentliche Verbindung zwischen Komponente 100 und Befestigungsstruktur herstellen. Die Anzahl und die genaue räumliche Ausgestaltung der Eckpunkte und damit der Befestigungsflächen 121 wird neben der äußeren Form und der inneren Struktur der Komponente 100 auch von der räumlichen Anordnung und dem Aufbau der Befestigungsstruktur bestimmt. Da die Befestigungsflächen 121 in solchen Bereichen der Komponente 100 bevorzugt angeordnet werden, in denen beispielsweise innere Stützelement oder Träger vorhanden sind, kann die Anordnung der Befestigungsflächen 121 zu unregelmäßigen geometrischen Grundflächen führen. Ggf. müssen im Entwurfsstadium der Komponente 100 geeignete innere Trägerstrukturen vorgesehen oder diese modifiziert werden, damit Befestigungsflächen 121 an geeigneten Orten vorgesehen werden können.

Aus Sicht einer optimalen Anbindung der Komponente 100 ist es gewünscht, dass die Befestigungsflächen 121 möglichst im äußeren unteren Randbereich der Komponente 100 angeordnet werden, beispielsweise in den Eckbereichen der Komponente 100. Lässt sich diese optimale Anordnung nicht realisieren, kann grundsätzlich jede andere räumliche Anordnung in Betracht kommen. Dabei sollte berücksichtigt werden, dass das Gewicht der Komponente 100 möglichst gleichmäßig auf die Befestigungsflächen 121 verteilt wird.

Darüber hinaus kann bei der räumlichen Anordnung der Befestigungsflächen 121 berücksichtigt werden, in welcher Richtung die Hauptbelastungen erfolgen. Beispielsweise ist zu erwarten, dass in Fahrrichtung durch starke Verzögerung, beispielsweise bei starken Bremsbewegungen oder beim langsamen Auffahren auf Prellböcken oder dergleichen, größere Beschleunigungen auftreten als beispielsweise in Querrichtung. In diesem Fall ist es günstig, die Befestigungsflächen 121 in Längsrichtung des Fahrzeugs etwas stärker voneinander zu beabstanden als in Querrichtung oder zusätzliche Befestigungsflächen 121 vorzusehen.

Die oben beschriebene Grundfläche kann, muss jedoch nicht in einer Ebene liegen. Es ist ebenso möglich, dass die Eckpunkte, definiert durch die Fußpunkte der Flächennormalen auf den Befestigungsflächen 121, nicht in einer Ebene liegen. Dies kann sich beispielsweise ebenfalls aus der äußeren Form oder der inneren Struktur der Komponente ergeben.

An den Befestigungsflächen 121 sind bevorzugt Befestigungsschnittstellen für auf einachsige Zug- bzw. Druckbeaufschlagung ausgelegte Befestigungselemente vorgesehen.

Beim Entwurf der Komponente, der Befestigungsschnittstellen und der Befestigungsflächen werden daher bevorzugt die Eckpunkte, d.h. die Gebiete, in denen Befestigungsflächen 121 und/oder Befestigungsschnittstellen vorgesehen werden sollen, unter Berücksichtigung einer optimalen Anbindung definiert. Berücksichtigung werden dabei weiterhin beispielsweise der Aufbau des Wagenkastens und die Einbaulage der Komponente finden. Dann kann ggf. die innere Struktur der Komponente ergänzt bzw. modifiziert werden, damit in den gewünschten Bereichen auch innere tragende Strukturen der Komponente vorhanden sind, die eine Ausbildung von Befestigungsflächen und oder Befestigungsschnittstellen ermöglichen.

Dies kann beispielsweise so erfolgen, dass zusätzliche Stützelemente 120 vorgesehen werden, die unter Formschluss die Ecken der Komponente 100 umfassen und die weiterhin entsprechend ausgerichtete Befestigungsflächen 121 mit Befestigungsschnittstellen aufweisen. Die separaten Stützelemente 120 können mit der Komponente 100 auch dauerhaft verbunden werden, beispielsweise verschweißt. Es ist jedoch auch möglich, dass die Stützelemente 120 lösbar mit der Komponente verbunden sind und die eigentliche Verbindung zwischen Komponente 100 und Befestigungsstruktur des Fahrzeugs über Befestigungselemente erfolgt, die weiter unten erläutert werden.

Beispielsweise können die Stützelemente 120 auch gleichzeitig eine dämpfende Funktion übernehmen. Alternativ können die Stützelemente 120 auch aus starrem Material bestehen.

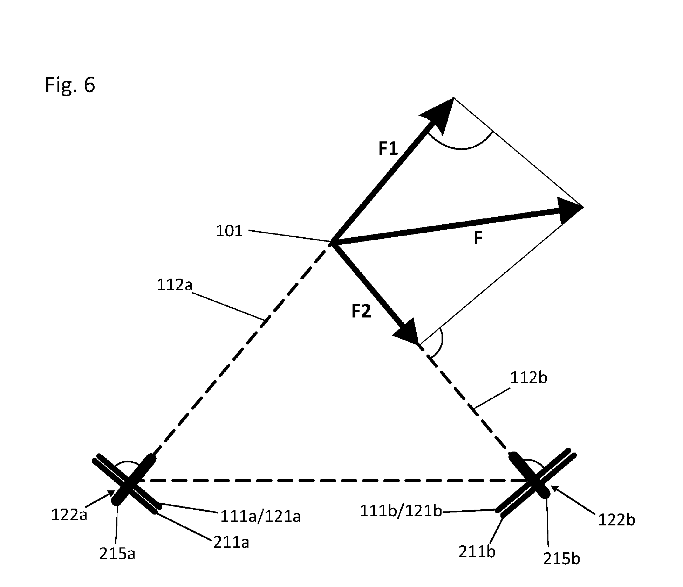

Die Wirkungsweise der hier beschriebenen reaktionsoptimierten Lagerung der Komponente 100 soll anhand der Figur 6 erläutert werden. Diese zeigt die schematisch die Aufspaltung der angreifenden Kraft F in Teilkräfte F1 und F2 aus einer seitlichen Ansicht einer Komponente. Die hier dargestellte Situation ist hier der Einfachheit halber für einen zweidimensionalen Fall dargestellt.

Eine beliebige Kraft F greift am Massenschwerpunkt 101 der Komponente an, in dem die Gesamtmasse der Komponente 100 als vereint veranschaulicht werden kann. Die Teilkräfte $F_1$ und $F_2$ wirken dann in Richtung der jeweiligen Flächennormalen 112a, 112b der Befestigungsflächen 111a/121a und 111b/121b, welche hier auch den Wirkachsen der jeweiligen Befestigungsschnittstellen entsprechen. Im vorliegenden Fall sind nur zwei Befestigungsflächen dargestellt, und die Ausführungen beschränken sich auch nur auf diese beiden Befestigungsflächen. Im realen 3-dimensionalen Fall gelten jedoch grundsätzlich die gleichen Erwägungen. Im vorliegenden Fall gilt

$$\vec{F} = \vec{F_1} + \vec{F_2}.$$

Im dreidimensionalen Fall gilt

$$\vec{F} = \sum_{l=1}^{l=n} \vec{F_l}$$

wobei die $\vec{F_l}$ die Teilkräfte entlang der einzelnen Flächennormalen bzw. Wirkachsen der Befestigungsschnittstellen sind und n die Gesamtanzahl der Befestigungsflächen bzw. der Befestigungsschnittstellen und damit der Flächennormalen ist.

Auf die Verbindung zwischen Befestigungsfläche 111b/121b und Auflagefläche 211b wirkt sich die angreifende Kraft F als Druckkraft $F_2$ aus, während sich die angreifende Kraft F auf die Verbindung zwischen Befestigungsfläche 111a/121a und Auflagefläche 211a als Zugkraftkraft $F_1$ auswirkt. Diese Kräfte wirken auch auf die jeweiligen Befestigungsschnittstellen. Im in Figur 7 dargestellten Fall ist die Zugkraft $F_1$ betragsmäßig größer als Druckkraft $F_2$, da die angreifende Kraft F etwas zur Ebene der Befestigungspunkte 122a und 122b geneigt ist. Unter einem Befestigungspunkt wird hier die Anbindung zwischen Befestigungsfläche und zugeordneter Auflagefläche entlang der hier dargestellten Befestigungselemente 215a, 215b verstanden.

Die angreifende Kraft F führt auch zu Kippmomenten. Jedoch wirken sich diese nicht auf die Befestigungspunkte 122a und 122b aus. Im Befestigungspunkt 122a wirkt allein die Zugkraft $F_1$. Wird diese durch eine entsprechende Anbindung der Komponente an die Befestigungsstruktur des Fahrzeugs aufgefangen, bleibt die Komponente stabil. Das gleiche gilt für den Befestigungspunkt 122b. Auf diesen wirkt lediglich die Druckkraft $F_2$. Scherkräfte, welche durch die angreifende Kraft F hervorgerufen werden, treten bei den Befestigungspunkten 122a und 122b nicht auf, da die jeweils angreifende Teilkomponente der angreifende Kraft F senkrecht auf der Befestigungsfläche 111a/121a, 111b/121b steht. Die räumliche Anordnung von Befestigungsflächen und Auflageflächen unterbinden das Auftreten von Scherkräften.

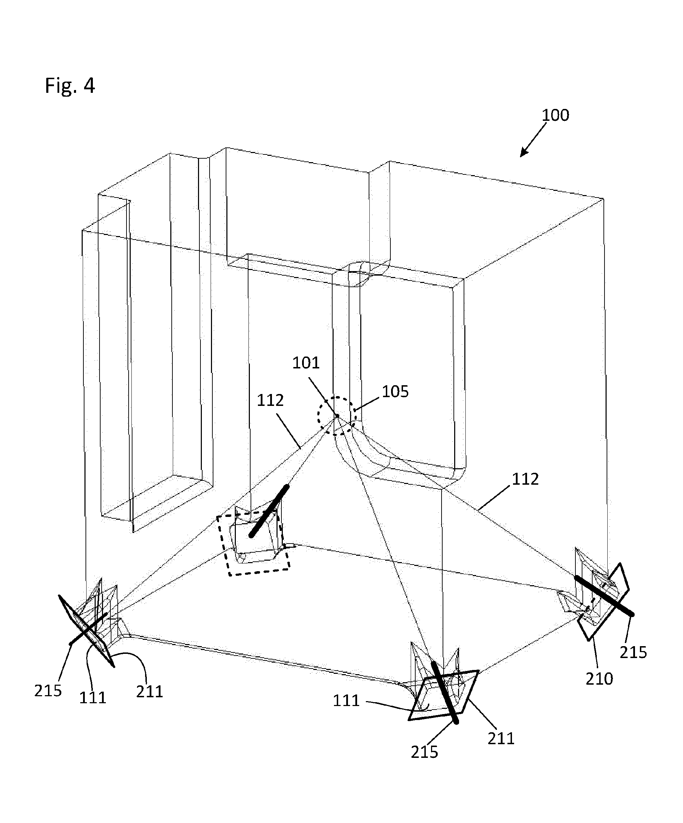

Somit können Befestigungselemente, wie beispielsweise in Figur 4 gezeigt, die senkrecht zu den jeweiligen Befestigungsflächen und Auflageflächen stehen und eine Verbindung zwischen der Komponente und der Befestigungsstruktur herstellen, auf Zug bzw. Druckbelastung hin optimiert werden. Scherkräfte spielen praktisch keine Rolle, insbesondere wenn die räumliche Verteilung der Befestigungsfläche geeignet gewählt ist.

Mit der hier beschriebenen Lagerung ist damit die Anbindung einer schweren Komponente an eine durch starke Stoßimpulse dynamisch belastete Hauptstruktur möglich, wobei die Lagerung bevorzugt ausschließlich mittels einachsiger, ausschließlich für Zug- bzw. Druckbeaufschlagung ausgelegter Befestigungselemente erfolgt. Die Befestigungselemente können deshalb aus nur wenigen einfachen Subelementen aufgebaut sein. Die Lagerung umfasst dabei komponentenseitige Befestigungsflächen, fahrzeugseitige Auflagefläche, jeweils entsprechende Befestigungsschnittstellen und Befestigungselemente, welche sich in Richtung der Flächennormalen von Befestigungsflächen und Auflageflächen erstrecken und dadurch nur auf Zug bzw. auf Druck beansprucht werden.

Damit wird eine Lagerung erreicht, die aus allen sechs unterschiedlichen Koordinatenrichtungen ($\pm x$, $\pm y$, $\pm z$) kommende Stoßbelastungen aufnehmen kann, ohne dass die Befestigungselemente und/oder dämpfenden Verbindungselemente nennenswerten Scherungskräften ausgesetzt werden.

Bevorzugt sind die komponentenseitigen Befestigungsflächen und die fahrzeugseitigen bzw. wagenkastenseitigen Auflageflächen, auf denen die Befestigungselemente aufsitzen werden können, parallel versetzt, und räumlich so geneigt, dass der Normalenvektor jeder einzelnen Befestigungsfläche/Auflagefläche auf den Massenschwerpunkt der Komponente gerichtet ist, wie in den Figuren angedeutet.

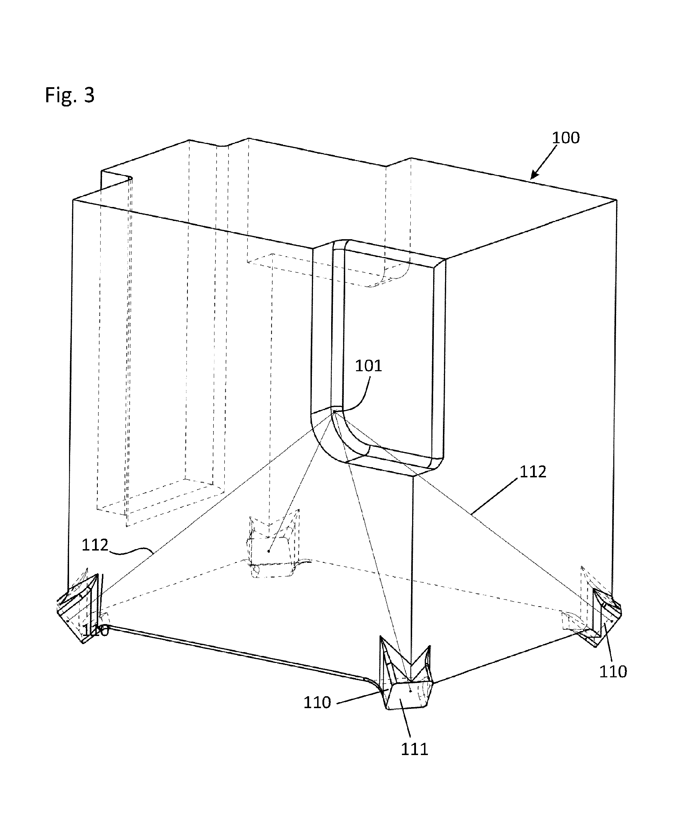

Im Ausführungsbeispiel der Figuren 1 und 2 sind die Befestigungsflächen 121 als Flächen der separaten Stützelemente 120 ausgeführt. Es ist jedoch auch möglich, die Befestigungsflächen 111 integral an der Komponente 100 auszubilden. Dies ist beispielhaft in Figur 3 gezeigt. Dort sind Ansätze 110 in den Eckbereichen der Komponente 100 ausgeformt, welche die Befestigungsflächen 111 aufweisen.

Im Entwurfsstadium der Komponente 100 können diese Ansätze 110 beispielsweise als zusätzliche Elemente zur Komponente hinzugenommen werden, sodass die Komponente 100 entwurfstechnisch um diese Ansätze 110 ergänzt wird. Dadurch werden diese Ansätze 110 mit den entsprechenden Befestigungsflächen 111 unmittelbar bei der Herstellung der Komponente 100 ausgebildet.

Eine Änderung der Lage des Massenschwerpunkts durch das entwurfstechnische Hinzufügen der Ansätze 110 kann damit auch unmittelbar im Entwurfsstadium berücksichtigt werden. Allerdings führen diese zusätzlichen Ansätze 110 regelmäßig zu keiner nennenswerten Verschiebung der Lage des Massenschwerpunkts.

In Figur 4 ist die Anbindung der Komponente 100 aus Figur 3 dargestellt, wobei hier wagenkastenseitige Auflagefläche 211 und Befestigungselemente 215 gezeigt sind, die senkrecht zu den jeweiligen Befestigungsflächen 110 und Auflageflächen 211 stehen. D.h. die Wirkachse dieser auf einachsige Zug- bzw. Druckbeaufschlagung ausgelegten Befestigungselemente 215 bzw. deren Wirklinie verläuft in Richtung der Flächennormalen und durchdringt die Sphäre 105.

Bei den Befestigungselementen 215 kann es sich beispielsweise um Bolzen oder Schraubverbindungen handeln.

Zwischen den Auflageflächen 211 und den Befestigungsflächen können Federungs- und Dämpfungselemente beliebiger Bauart zwecks schwingungstechnischer Trennung von Komponente und Fahrzeug eingebaut werden. Dies kann beispielsweise unter Zwischenlage geeigneter dämpfender Materialschichten erfolgen.

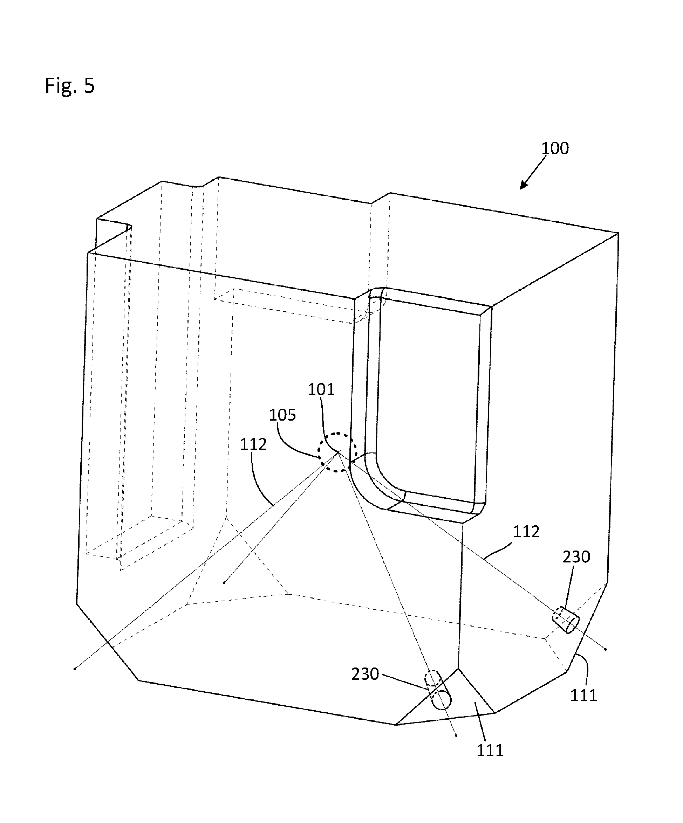

Figur 5 6 zeigt eine Komponente 100 mit integral ausgebildeten Befestigungsflächen 111. Die Befestigungsflächen 111 sind hier nicht unter Zuhilfenahme von entwurfstechnisch hinzugefügten Ansätzen ausgeformt, sondern durch ein entwurfstechnisches "Abschneiden" von der äußeren Form der Komponente 100. Sämtliche hier beschriebenen Varianten zur Ausbildung bzw. Bereitstellung von Befestigungsflächen, entweder als integrale Befestigungsfläche oder über separate, nachfolgend mit der Komponente zu verbindende Stützelemente, können miteinander kombiniert werden.

Die Befestigungsflächen 111 weisen weiterhin Befestigungsschnittstellen 230 auf, die hier in Form von Bohrungen mit Innengwinde ausgeführt sind. Die Wirkachse der Befestigungsschnittstellen 230 ist auf den Massenschwerpunkt 101 ausgerichtet, d.h. sie verlaufen senkrecht zu den Befestigungsflächen 111. Damit werden in die Bohrungen eingeschraubte Befestigungselemente ebenfalls in Richtung zum Massenschwerpunkt 101 ausgerichtet.

Wenngleich hierin spezifische Ausführungsformen dargestellt und beschrieben worden sind, liegt es im Rahmen der vorliegenden Erfindung, die gezeigten Ausführungsformen geeignet zu modifizieren, ohne vom Schutzbereich der vorliegenden Erfindung abzuweichen. Die nachfolgenden Ansprüche stellen einen ersten, nicht bindenden Versuch dar, die Erfindung allgemein zu definieren.

**Bezugszeichenliste**

| 100 | Komponente / Transformator |
| 101 | Massenschwerpunkt |
| 105 | Sphäre |
| 110 | Ansatz |
| 111, 111a, 111b | Befestigungsfläche |
| 112, 112a, 112b | Flächennormale |
| 120 | Stützelement |
| 121 | Befestigungsfläche |
| 211, 211a, 211b | Auflagefläche |
| 215, 215a, 215b | Befestigungselement |
| 230 | Befestigungsschnittstelle |

**Patentansprüche**

1. Komponente zum Befestigen an einer Befestigungsstruktur, wobei die Komponente (100)

   - einen Massenschwerpunkt (101) mit einer vordefinierten Sphäre (105) um den Massenschwerpunkt (101) hat, und
   - mehrere, insbesondere voneinander beabstandete Befestigungsschnittstellen (230) für einachsige Befestigungselemente (215) aufweist, durch welche die Befestigungselemente (215) derart ausgerichtet werden, dass die Wirklinien der von den Befestigungselementen (215) zum Befestigen der Komponente aufgebrachten Haltekräfte die Sphäre (105) um den Massenschwerpunkt (101) durchdringen.

2. Komponente zum Befestigen an einer Befestigungsstruktur, wobei die Komponente (100)

   - einen Massenschwerpunkt (101) mit einer vordefinierten Sphäre (105) um den Massenschwerpunkt (101) hat, und
   - mehrere, insbesondere voneinander beabstandete Befestigungsschnittstellen (230) für einachsige Befestigungselemente (215) aufweist, die für einachsige Zug- und/oder Druckbelastung in Richtung einer Wirkachse ausgebildet sind, wobei die Befestigungselemente (215) bei Befestigung der Komponente an der Befestigungsstruktur derart durch die Befestigungsschnittstellen (230) ausgerichtet werden, dass die Wirkachse jedes Befestigungselements (215) die Sphäre (105) um den Massenschwerpunkt (101) durchdringt.

3. Komponente nach Anspruch 1 oder 2, wobei das Volumen der Sphäre (105) maximal 6 % und insbesondere maximal 3% des Volumens der Komponente (100) beträgt.

4. Komponente nach einem der Ansprüche 1 bis 3, weiterhin aufweisend:

- mehrere, insbesondere voneinander beabstandete Befestigungsflächen (111, 121), die räumlich so ausgerichtet sind, dass die durch den Flächenschwerpunkt oder Befestigungsflächenschwerpunkt verlaufende Flächennormale (112) jeder einzelnen Befestigungsfläche (111, 121) die Sphäre (105) um den Massenschwerpunkt (101) der Komponente (100) durchdringt, wobei an jeder Befestigungsfläche (111,121) eine Befestigungsschnittstelle (230) für jeweils ein einachsiges Befestigungselement (215) vorgesehen ist, und

- wobei optional die Befestigungsflächen (111, 121) integraler Bestandteil der Komponente (100) sind.

5. Komponente nach Anspruch 4, weiterhin umfassend Stützelemente (120), welche bevorzugt form-, kraft-, reib-, und/oder stoffschlüssig mit der Komponente (100) verbunden sind, wobei an jedem Stützelement (120) wenigstens jeweils eine der Befestigungsflächen (121) ausgebildet ist.

6. Komponente nach einem der Ansprüchen 4 bis 5, wobei die den Flächenschwerpunkt der Befestigungsflächen (111, 121) durchdringende Flächennormale maximal 22,5° von einer den Flächenschwerpunkt mit dem Massenschwerpunkt der Komponente verbindenden Geraden abweicht, vorzugsweise nur 15° und besonders vorzugsweise < 5°.

7. Komponente nach einem der Ansprüche 1 bis 6, wobei die Komponente ein Transformator ist.

8. Fahrzeug, insbesondere Schienenfahrzeug, mit einer Befestigungsstruktur, an der eine Komponente nach einem der vorherigen Ansprüche mittels einachsiger Befestigungselemente (215) befestigt ist, sodass die Wirklinien der von den Befestigungselementen (215) zum Befestigen und Halten der Komponente an der Befestigungsstruktur aufgebrachten Haltekräfte die Sphäre (105) um den Massenschwerpunkt (101) durchdringen.

9. Fahrzeug nach Anspruch 8, wobei die Komponente mehrere, insbesondere voneinander beabstandete Befestigungsflächen (111, 121) aufweist, die räumlich so ausgerichtet sind, dass die durch den Befestigungsflächenschwerpunkt verlaufende Flächennormale (112) jeder einzelnen Befestigungsfläche (111, 121) die Sphäre (105) um den Massenschwerpunkt der Komponente (100) durchdringt,

- wobei die Befestigungsstruktur des Fahrzeugs zu den Befestigungsflächen (111, 121) der Komponente (100) korrespondierende Auflageflächen (211) aufweist, die zumindest abschnittsweise parallel zu den Befestigungsflächen (111, 121) verlaufen, wobei jede Befestigungsfläche (111, 121) der Komponente (100) parallel zu einer ihr zugeordneten Auflagefläche (211) verläuft.

10. Fahrzeug nach Anspruch 9, wobei jeder Befestigungsfläche (111, 121) mit zugeordneter Auflagefläche (211) mindestens ein Befestigungselement (215) zugeordnet ist, das sich in Richtung der durch den Befestigungsflächenschwerpunkt verlaufenden Flächennormalen (112) der Befestigungsfläche (111, 121) erstreckt.

11. Fahrzeug nach einem der Ansprüche 8 bis 10, wobei jede Befestigungsfläche (111, 121) der Komponente (100) an einer ihr zugeordneten Auflagefläche (211) unter Zwischenlage eines schwingungsdämpfenden Elements anliegt, und/oder wobei die Befestigungsstruktur mit dem Wagenkasten des Fahrzeugs starr verbunden ist.

12. Verfahren zur Herstellung einer Komponente, umfassend:

- Ermitteln des Massenschwerpunkts (101) der Komponente (100) und Definieren einer Sphäre (105) um den Massenschwerpunkt der Komponente (100); und

- Ausbilden von mehreren, insbesondere voneinander beabstandeten Befestigungsschnittstellen (230) für auf einachsige Zug- bzw. Druckbeaufschlagung ausgelegte Befestigungselemente (215) an der Komponente, durch welche die Befestigungselemente (215) zum Befestigen der Komponente derart ausrichtbar sind, dass die Wirklinien der von den Befestigungselementen (215) zum Befestigen der Komponente aufgebrachten Haltekräfte die Sphäre um den Massenschwerpunkt (101) durchdringen.

13. Verfahren nach Anspruch 12, weiterhin umfassend:

- Ausbilden von Befestigungsflächen (111, 121) an der Komponente (100), die räumlich so ausgerichtet sind, dass die durch den Befestigungsflächenschwerpunkt verlaufende Flächennormale (112) jeder einzelnen Befestigungsfläche (111, 121) die Sphäre (105) um den Massenschwerpunkt (101) der Komponente (100) durchdringt.

14. Verfahren zur Herstellung eines Fahrzeugs, insbesondere eines Schienenfahrzeugs, aufweisend:

- Herstellen einer Komponente (100) nach Anspruch 12 oder 13;
- Herstellen einer Befestigungsstruktur, die mit dem Fahrzeugs verbunden ist; und

21 EP 2 916 015 A1 22

- Befestigen der Komponente (100) mittels Befestigungselementen (215) an der Befestigungsstruktur, sodass die Befestigungselemente (215) so durch die Befestigungsschnittstellen ausgerichtet sind, dass die Wirklinien der Befestigungselemente (215) die Sphäre (105) durchdringen.

15. Verfahren nach Anspruch 14, wobei die Befestigungsstruktur Auflagefläche (211) hat und jede Auflagefläche (211) zumindest abschnittsweise parallel zu einer ihr zugeordneten Befestigungsfläche (111, 121) der Komponente (100) und/oder der Stützelemente (120) angeordnet ist.

12

Fig. 1

100

101

105

112

120

121

121

121

Fig. 2

121

120

112

101

112

121

120

112

112

121

120

120

121

121

Fig. 3

Fig. 4

Fig. 5

Fig. 6

Europäisches
Patentamt

European
Patent Office

Office européen
des brevets

**EUROPÄISCHER RECHERCHENBERICHT**

Nummer der Anmeldung

EP 15 15 7846

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | GB 546 004 A (METALASTIK LTD; MAX GOLDSCHMIDT) 23. Juni 1942 (1942-06-23) * Seite 2, Zeilen 4-8; Abbildungen 1-2 * | 1-15 | INV. F16B5/02 B61D45/00 F16F15/02 |
| X | DE 43 17 467 A1 (BOSCH GMBH ROBERT [DE]) 1. Dezember 1994 (1994-12-01) * Zusammenfassung; Abbildungen * | 1,2,12, 14 | |
| X | US 2 457 340 A (EDWIN BERRY PHILIP) 28. Dezember 1948 (1948-12-28) * Abbildung 2 * | 1,2,12, 14 | |
| X | US 1 761 815 A (BUSCH CHARLES R) 3. Juni 1930 (1930-06-03) * Abbildung 5 * | 1,2,12, 14 | |
| X | DE 943 669 C (SIEMENS AG) 24. Mai 1956 (1956-05-24) * Seite 2, Zeilen 63-75; Abbildung 5 * | 1,2 | |
| X | WO 2005/090882 A1 (BSH BOSCH SIEMENS HAUSGERAETE [DE]; GOMOLL GUENTER [DE]; GRASY SIEGFRI) 29. September 2005 (2005-09-29) * Ansprüche 1-5; Abbildungen * | 1,2 | RECHERCHIERTE SACHGEBIETE (IPC) F16F F16B B61D |
| X | US 3 921 039 A (ROBINSON ARTHUR R ET AL) 18. November 1975 (1975-11-18) * Anspruch 1; Abbildungen * | 1,2 | |
| X,D | DE 10 2005 057121 A1 (SIEMENS AG [DE]) 31. Mai 2007 (2007-05-31) * Zusammenfassung; Abbildungen * | 1,2 | |
| X,D | CN 201 745 603 U (NN) 16. Februar 2011 (2011-02-16) * Abbildungen * | 1,2 | |

-/--

Der vorliegende Recherchenbericht wurde für alle Patentansprüche erstellt

| Recherchenort | Abschlußdatum der Recherche | Prüfer |
|---|---|---|
| München | 3. Juli 2015 | Pöll, Andreas |

KATEGORIE DER GENANNTEN DOKUMENTE

X : von besonderer Bedeutung allein betrachtet
Y : von besonderer Bedeutung in Verbindung mit einer
     anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
     nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes
     Dokument

EPO FORM 1503 03.82 (P04C03)

Europäisches
Patentamt

European
Patent Office

Office européen
des brevets

**EUROPÄISCHER RECHERCHENBERICHT**

Nummer der Anmeldung

EP 15 15 7846

| | **EINSCHLÄGIGE DOKUMENTE** | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| X | DE 12 52 618 B (SUSPA FEDERUNGSTECHNIK) 26. Oktober 1967 (1967-10-26) * Abbildungen * ----- | 1,2 | |
| | | | **RECHERCHIERTE SACHGEBIETE (IPC)** |

Der vorliegende Recherchenbericht wurde für alle Patentansprüche erstellt

| Recherchenort | Abschlußdatum der Recherche | Prüfer |
|---|---|---|
| München | 3. Juli 2015 | Pöll, Andreas |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

........................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 15 15 7846

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-07-2015

| Im Recherchenbericht angeführtes Patentdokument | Datum der Veröffentlichung | Mitglied(er) der Patentfamilie | Datum der Veröffentlichung |
|---|---|---|---|
| GB 546004 A | 23-06-1942 | KEINE | |
| DE 4317467 A1 | 01-12-1994 | DE 4317467 A1<br>EP 0699146 A1<br>JP H08510196 A<br>US 5697678 A<br>WO 9427846 A1 | 01-12-1994<br>06-03-1996<br>29-10-1996<br>16-12-1997<br>08-12-1994 |
| US 2457340 A | 28-12-1948 | FR 932779 A<br>US 2457340 A | 01-04-1948<br>28-12-1948 |
| US 1761815 A | 03-06-1930 | KEINE | |
| DE 943669 C | 24-05-1956 | KEINE | |
| WO 2005090882 A1 | 29-09-2005 | CN 1930430 A<br>DE 102004012495 A1<br>DE 202005021919 U1<br>EP 1728035 A1<br>EP 2256445 A1<br>WO 2005090882 A1 | 14-03-2007<br>06-10-2005<br>19-05-2011<br>06-12-2006<br>01-12-2010<br>29-09-2005 |
| US 3921039 A | 18-11-1975 | KEINE | |
| DE 102005057121 A1 | 31-05-2007 | AT 503149 A2<br>CH 699841 B1<br>DE 102005057121 A1 | 15-08-2007<br>14-05-2010<br>31-05-2007 |
| CN 201745603 U | 16-02-2011 | KEINE | |
| DE 1252618 B | 26-10-1967 | DE 1252618 B<br>FR 1353957 A | 03-07-2015<br>28-02-1964 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005057121 A1
- CN 201745603 U
- CN 201278288 Y
- JP 5335153 A